# EUROPEAN PATENT APPLICATION

(11) **EP 4 786 275 A1**
(43) Date of publication of application: **05.08.2026**
(21) Application number: 24890319.7
(22) Date of filing: 14.09.2024
(51) Int. Cl.: B60Q 1/14

(54) **VEHICLE HIGH-BEAM AND LOW-BEAM CONTROL SYSTEM AND CONTROL METHOD AND VEHICLE**

(30) Priority: 15.11.2023 CN 202311518857
(71) Applicant: Hasco Vision Technology Co., Ltd., Jiading District Shanghai 201821 (CN)
(72) Inventor: ZHANG, Jie, Shanghai 201821 (CN); DONG, Shikun, Shanghai 201821 (CN)
(74) Representative: SSM Sandmair
(86) International application number: PCT/CN2024/119102
(87) International publication number: WO 2025/102960

(57) **Abstract**

The present disclosure relates to the field of vehicle lamp control, and discloses a vehicle high-beam and low-beam control system, a control method and a vehicle. The control system comprises a signal receiving module, a light source module and a control module, wherein the light source module comprises a light source unit and a light projection position adjusting structure; when the information received by the signal receiving module indicates turning on the low beam, the control module controls the light projection position adjusting structure to adjust the light source unit to form a low beam light pattern on a light distribution screen; when the information received by the signal receiving module indicates turning on the high beam, the control module controls the light projection position adjusting structure to adjust the emergent angle of the light source unit so that the illuminance at the HV point of the light pattern formed by the light source unit on the light distribution screen is increased by 5-342 lx compared with the illuminance at the HV point of the low beam light pattern. The control system can improve the utilization efficiency of light energy, reduce the power consumption of headlamps, and simplify the high-beam and low-beam power supply circuits in the vehicle.

## Description

### CROSS REFERENCE TO RELATED APPLICATIONS

The present application claims the benefits of Chinese Patent Application No. 202311518857.8 filed on Nov. 15, 2023, the content of which is incorporated herein by reference.

### FIELD

The present disclosure relates to vehicle lamp control, in particular to a vehicle high-beam and low-beam control system, a control method and a vehicle.

### BACKGROUND

Vehicle headlamps are categorized into low beam illumination and high beam illumination functions. The low beam illumination is mainly intended to meet the requirements for coverage of the illumination range and brightness of illumination, while avoiding affecting other vehicles on the road, i.e., avoiding dazzling the drivers of other vehicles on the road and causing compromised driving safety. The high beam illumination is turned on when there is no other vehicle on the road or other vehicles on the road are far away, so as to provide illumination in a longer range.

There are many ways to switch between high-beam and low-beam. A headlamp having separate high-beam and low-beam illumination systems can be switched between high beam illumination and low beam illumination system by turning on or off the high beam illumination system. A headlamp having a double filament bulb, such as a H4 bulb, is designed with high-beam and low-beam illumination light patterns corresponding to different filaments and can be switched between high beam illumination and low beam illumination by switching the operation between the filaments. In addition, there are illumination systems that integrate high beam illumination and low beam illumination. In such an illumination system, the illumination is switched between a high beam light pattern and a low beam light pattern by switching the position of a light shield with a solenoid valve; alternatively, separate high-beam and low-beam light sources and corresponding optical elements such as reflecting mirrors or condensers are provided, and the illumination is switched between high-beam and low-beam by switching on or off the high beam light source.

In the above-mentioned illumination system in which the illumination is switched between a high beam light pattern and a low beam light pattern by switching the position of a light shield, when the low beam function is desired, the position of the light shield can be switched so that light-dark cutoff lines occur on the top part of the low beam, but the actual power of the light source is unchanged, which is to say, there is light energy waste when the low beam function is used. Moreover, the light blocked by the light shield still irradiates on the light shield, resulting in local overtemperature and a potential safety hazard after long-time irradiation. In the other two approaches, separate low beam and high beam illumination systems have to be provided, and two circuits have to be provided in the vehicle body to supply power to the high beam illumination system and the low beam illumination system respectively.

### SUMMARY

A first object of the present disclosure is to provide a vehicle high-beam and low-beam control system, which can improve the utilization efficiency of light energy, reduce a potential safety hazard caused by local overtemperature, and simplify the high-beam and low-beam circuits in the vehicle.

A second object of the present disclosure is to provide a vehicle high-beam and low-beam control method, which can improve the utilization efficiency of light energy, reduce the power used for high-beam and low-beam, reduce a potential safety hazard caused by local overtemperature, and simplify the high-beam and low-beam power supply circuits in the vehicle.

A third object of the present disclosure is to provide a vehicle, which can improve the utilization efficiency of light energy, reduce a potential safety hazard caused by local overtemperature, and simplify the high-beam and low-beam power supply circuits in the vehicle.

In order to achieve the above objects, in a first aspect, the present disclosure provides a vehicle high-beam and low-beam control system, which comprises a signal receiving module, a light source module and a control module, wherein
the light source module comprises a light source unit and a light projection position adjusting structure that is connected with the light source unit so as to adjust an emergent angle of the light source unit;
the signal receiving module is adapted to receive information that indicates turning on or off a high beam/low beam function, and the control module is connected with the signal receiving module, the light source unit and the light projection position adjusting structure respectively; when the information received by the signal receiving module indicates turning on the low beam function, the control module controls the light source unit to turn on, and controls the light projection position adjusting structure to adjust the emergent angle of the light source unit, so that the light source unit forms a low beam light pattern on a light distribution screen; and when the information received by the signal receiving module indicates turning on the high beam function, the control module controls the light source unit to turn on, and controls the light projection position adjusting structure to adjust the emergent angle of the light source unit so that the illuminance at an HV point of the light pattern formed by the light source unit on the light distribution screen is increased by 5-342 lx compared with the illuminance at the HV point of the low beam light pattern.

Preferably, the light source unit is a primary low beam light source unit configured for mainly contributing to luminance.

Preferably, when the information received by the signal receiving module indicates turning on the high beam function, the control module controls the primary low beam light source unit to turn on, and controls the light projection position adjusting structure to adjust the emergent angle of the primary low beam light source unit, so that the light emitted by the primary low beam light source unit is shifted upward by 0.4-5 degrees on the light distribution screen with respect to the light when the low beam function is used.

Further preferably, when the information received by the signal receiving module indicates turning on the high beam function, the control module controls the primary low beam light source unit to turn on, and controls the light projection position adjusting structure to adjust the emergent angle of the primary low beam light source unit, so that the light emitted by the primary low beam light source unit is shifted upward by 0.57-2.5 degrees on the light distribution screen with respect to the light when the low beam function is used.

Preferably, in a left-hand driving mode, the control module further controls the light projection position adjusting structure to adjust the emergent angle of the primary low beam light source unit, so that the light emitted by the primary low beam light source unit is shifted leftward by 0-15 degrees on the light distribution screen with respect to the light when the low beam function is used; and
in a right-hand driving mode, the control module further controls the light projection position adjusting structure to adjust the emergent angle of the primary low beam light source unit, so that the light emitted by the primary low beam light source unit is shifted rightward by 0-15 degrees on the light distribution screen with respect to the light when the low beam function is used.

Preferably, when the information received by the signal receiving module indicates turning on the high beam function, the control module controls the primary low beam light source unit to turn on, and controls the light projection position adjusting structure to adjust the emergent angle of the primary low beam light source unit, so that the light pattern formed by the primary low beam light source unit on the light distribution screen coincides with a light pattern obtained by rotating the low beam light pattern by 180 degrees around an H-H line that serves as an axis of rotation.

Preferably, the light source module further comprises a secondary low beam light source unit for mainly contributing to broadening, the control module is connected with the secondary low beam light source unit, and the light projection position adjusting structure is connected with the secondary low beam light source unit; when the information received by the signal receiving module indicates turning on the low beam function, the control module controls the secondary low beam light source unit to turn on, and controls the light projection position adjusting structure to adjust the emergent angle of the secondary low beam light source unit, so that the secondary low beam light source forms a secondary low beam light pattern on the light distribution screen; and when the information received by the signal receiving module indicates turning on the high beam function, the control module controls the secondary low beam light source unit to turn on, and controls the light projection position adjusting structure to adjust the emergent angle of the secondary low beam light source unit, so that the illuminance at the HV point of the light pattern formed by the secondary low beam light source unit on the light distribution screen is increased by 5-342 lx compared with the illuminance at the HV point of the secondary low beam light pattern.

Preferably, the primary low beam light source unit comprises at least one primary low beam light source; when the information received by the signal receiving module indicates turning on the high beam function, the control module controls the circuit where the primary low beam light source is located to increase the current inputted to the primary low beam light source and/or a duty ratio of the current.

Further preferably, the primary low beam light source unit comprises at least three primary low beam light sources; when the information received by the signal receiving module indicates turning on the high beam function, the control module controls the circuit where the primary low beam light source in the middle is located to increase the current inputted to the primary low beam light source and/or a duty ratio of the current.

Preferably, the light source module further comprises a secondary high beam light source unit, and the control module is connected with the secondary high beam light source unit; when the information received by the signal receiving module indicates turning on the low beam function, the control module controls the secondary high beam light source unit to turn off; and when the information received by the signal receiving module indicates turning on the high beam function, the control module controls the secondary high beam light source unit to turn on.

Further preferably, the light projection position adjusting structure is connected with the secondary high beam light source unit, so as to adjust the emergent angle of the secondary high beam light source unit.

Preferably, the light source module further comprises an ADB light source unit, and the control module is connected with the ADB light source unit; when the information received by the signal receiving module indicates turning on the low beam function, the control module controls the ADB light source unit to turn off; and when the information received by the signal receiving module indicates turning on the high beam function, the control module controls the ADB light source unit to turn on.

In a second aspect, the present disclosure provides a vehicle high-beam and low-beam control method, which comprises:
a light source module comprising a light source unit and a light projection position adjusting structure that is connected with the light source unit so as to adjust an emergent angle of the light source unit;
in response to the receival of a control instruction for turning on the low beam, controlling the light source unit to turn on, and controlling the light projection position adjusting structure to adjust an emergent angle of the light source unit, so that the light source unit forms a low beam light pattern on a light distribution screen; and
in response to the receival of a control instruction for turning on the high beam, controlling the light source unit to turn on, and controlling the light projection position adjusting structure to adjust the emergent angle of the light source unit, so that the illuminance at an HV point of the light pattern formed by the light source unit on the light distribution screen is increased by 5-342 lx compared with the illuminance at the HV point of the low beam light pattern.

Preferably, the light source unit is a primary low beam light source unit for mainly contributing to luminance; in response to the receival of a control instruction for turning on the high beam, the primary low beam light source unit is controlled to turn on, and the light projection position adjusting structure is controlled to adjust the emergent angle of the primary low beam light source unit, so that the light emitted from the primary low beam light source unit is shifted upward by 0.4-5 degrees on the light distribution screen with respect to the light when the low beam function is used; or
in response to the receival of a control instruction for turning on the high beam, the primary low beam light source unit is controlled to turn on, and the light projection position adjusting structure is controlled to adjust the emergent angle of the primary low beam light source unit, so that the light pattern formed by the primary low beam light source unit on the light distribution screen coincides with a light pattern obtained by rotating the low beam light pattern by 180 degrees around an H-H line that serves as an axis of rotation.

Preferably, the light source unit is a primary low beam light source unit for mainly contributing to luminance, and the light source module further comprises a secondary low beam light source unit for mainly contributing to broadening;
in response to the receival of a control instruction for turning on the low beam, the secondary low beam light source unit is controlled to turn on, and the light projection position adjusting structure is controlled to adjust the emergent angle of the secondary low beam light source unit, so that the secondary low beam light source unit forms a secondary low beam light pattern on the light distribution screen; and in response to the receival of a control instruction for turning on the high beam, the secondary low beam light source unit is controlled to turn on, and the light projection position adjusting structure is controlled to adjust the emergent angle of the secondary low beam light source unit, so that the illuminance at the HV point of the light pattern formed by the secondary low beam light source unit on the light distribution screen is increased by 5-342 lx compared with the illuminance at the HV point of the secondary low beam light pattern.

Preferably, the light source unit is a primary low beam light source unit for mainly contributing to luminance, the light source module further comprises a secondary high beam light source unit, and the light projection position adjusting structure is connected with the secondary high beam light source unit so as to adjust the emergent angle of the secondary high beam light source unit; in response to the receival of a control instruction for turning on the low beam, the secondary high beam light source unit is controlled to turn off; and in response to the receival of a control instruction for turning on the high beam, the secondary high beam light source unit is controlled to turn on.

In a third aspect, the present disclosure provides a vehicle, which comprises the vehicle high-beam and low-beam control system according to the first aspect and executes the high-beam and low-beam control method according to the second aspect.

With the above-mentioned technical scheme, the light projection position adjusting structure is connected with the light source unit, and the control module controls the light projection position adjusting structure to adjust the emergent angle of the light source unit according to an instruction for turning on or off the high beam/low beam function, so that a low beam light pattern is formed on the light distribution screen when the low beam function is used, and the illuminance at the HV point of the light pattern formed on the light distribution screen when the high beam function is used is increased by 5-342 lx compared with the illuminance at the HV point of the low beam light pattern, thereby the utilization efficiency of light energy is improved, and a potential safety hazard caused by local overtemperature can be reduced. Moreover, it is unnecessary to arrange a high beam circuit and a low beam circuit separately, thus, the high-beam and low-beam circuits in the vehicle can be simplified, and the potential safety hazard can be further reduced.

Other advantages of the present disclosure and the technical effects of preferred embodiments will be further detailed below in embodiments.

### BRIEF DESCRIPTION OF THE DRAWINGS

Fig. 1 is a schematic diagram of the illuminance of the low beam on the light distribution screen according to an embodiment of the present disclosure;
Fig. 2 is a first schematic diagram of the illuminance of the high beam on the light distribution screen according to an embodiment of the present disclosure;
Fig. 3 is a schematic diagram of the illuminance of the high beam on the light distribution screen according to another embodiment of the present disclosure;
Fig. 4 is a schematic structural diagram of the primary low beam light source unit according to an embodiment of the present disclosure;
Fig. 5 is a second schematic diagram of the illuminance of the high beam on the light distribution screen according to an embodiment of the present disclosure;
Fig. 6 is a schematic diagram of the illuminance of the secondary high beam on the light distribution screen according to an embodiment of the present disclosure;
Fig. 7 is a schematic diagram of the illuminance of the high beam on the light distribution screen according to a third embodiment of the present disclosure;
Fig. 8 is a schematic diagram of the illuminance of the low beam on the light distribution screen according to another embodiment of the present disclosure;
Fig. 9 is a schematic structural diagram of the light source module according to an embodiment of the present disclosure;
Fig. 10 is an exploded view of the structure in Fig. 9;
Fig. 11 is a structural schematic diagram of the light projection position adjusting structure according to an embodiment of the present disclosure;
Fig. 12 is a schematic diagram of the illuminance of the secondary high beam on the light distribution screen according to the third embodiment of the present disclosure;
Fig. 13 is a schematic diagram of the illuminance of the primary high beam on the light distribution screen according to the third embodiment of the present disclosure;
Fig. 14 is a schematic diagram of the illuminance of the high beam on the light distribution screen according to the third embodiment of the present disclosure; and
Fig. 15 is a schematic diagram of the illuminance of the high beam on the light distribution screen according to a fourth embodiment of the present disclosure in which an ADB function is provided.

### DETAILED DESCRIPTION

Some embodiments of the present disclosure will be described in detail below with reference to the accompanying drawings. However, it may be understood that the embodiments described herein are only intended to explain and interpret the present disclosure, and the scope of protection of the present disclosure is not limited to those embodiments.

Furthermore, in the present disclosure, it may be noted that the terms "install" and "connect" shall be interpreted in their general meanings, for example, a connection may be a fixed connection, a detachable connection, or an integral connection; may be a direct connection or an indirect connection via an intermediate medium, or internal communication between two elements or interaction between two elements, unless otherwise specified and defined explicitly. Those having ordinary skills in the prior art can understand the specific meanings of the terms in the present disclosure in their contexts.

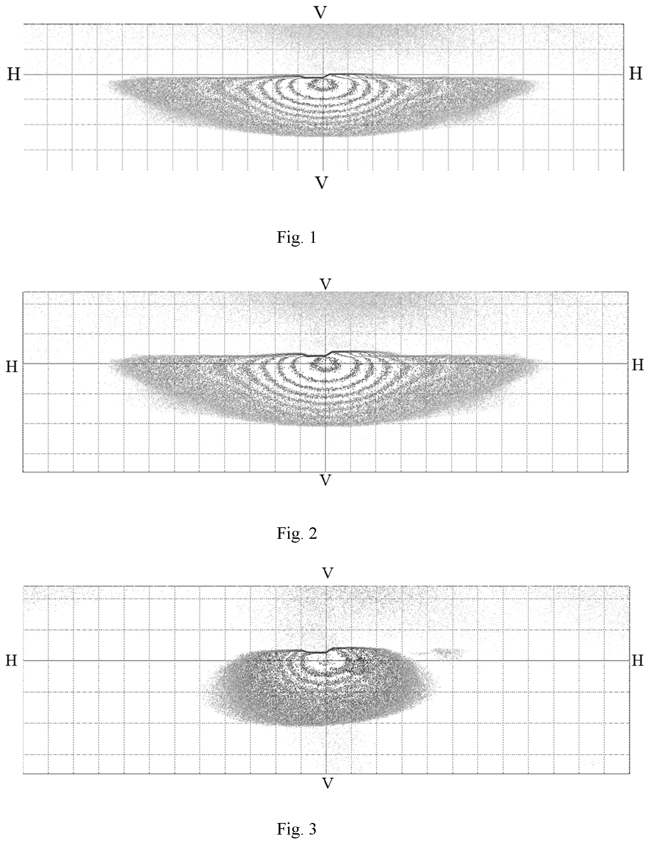

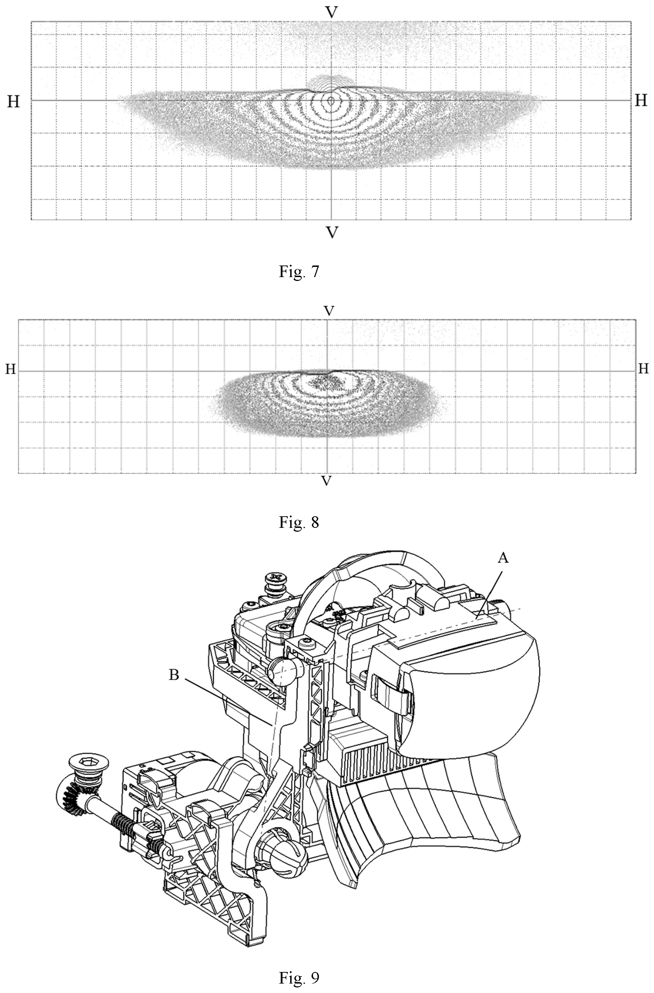

As a basic embodiment of the present disclosure, a vehicle high-beam and low-beam control system is provided. The vehicle high-beam and low-beam control system comprises a signal receiving module, a light source module and a control module, wherein the light source module comprises a light source unit and a light projection position adjusting structure that is connected with the light source unit so as to adjust an emergent angle of the light source unit; the signal receiving module is adapted to receive information that indicates turning on or off a high beam/low beam function, and the control module is connected with the signal receiving module, the light source unit and the light projection position adjusting structure respectively; when the information received by the signal receiving module indicates turning on the low beam function, the control module controls the light source unit to turn on, and controls the light projection position adjusting structure to adjust the emergent angle of the light source unit, so that the light source unit forms a low beam light pattern, as shown in Fig. 1 or Fig. 8, on a light distribution screen; and when the information received by the signal receiving module indicates turning on the high beam function, the control module controls the light source unit to turn on, and controls the light projection position adjusting structure to adjust the emergent angle of the light source unit so that the illuminance at the HV point of the light pattern formed by the light source unit on the light distribution screen is increased by 5-342 lx compared with the illuminance at the HV point of the low beam light pattern, as shown in Fig. 2, Fig. 3, or Figs. 13-14.

According to the present disclosure, the light distribution screen is usually arranged vertically at a position at a distance of 25 meters in front of the reference center of a headlamp. An H-H line is a horizontal line passing through a HV point on the light distribution screen, a V-V line is a vertical line passing through the HV point on the light distribution screen, and the HV point is the intersection between the H-H line and the V-V line. 'Upward' and 'downward' are normal upward and downward directions of the light distribution screen, and 'leftward' and 'rightward' directions are the corresponding leftward and rightward directions after the upward and downward directions are determined and the light emergent direction is determined as a forward direction and the direction opposite to the light emergent direction is determined as a backward direction.

As an embodiment of the present disclosure, as shown in Fig. 2, there may be light at the HV point, and the illuminance at the HV point is increased compared with the illuminance when the low beam function is turned on. In addition, in this embodiment, the range of irradiation of the light emitted by the light source unit above the H-H line is much greater than the range of irradiation above the H-H line when the low beam function is turned on.

The light source unit may comprise a light source, a substrate for fixing the light source, and an optical element disposed in an optical path of the light source. The optical element may be a reflecting mirror, a lens, or the like. The light projection position adjusting structure is connected between the light source unit and the vehicle body, so that the emergent angle of the light source unit can be adjusted by means of the action of the light projection position adjusting structure.

During the operation of the vehicle high-beam and low-beam control system provided in the above basic embodiment, when the natural lighting is insufficient and the vehicle lamp is to be turned on, the control module controls the light source unit to turn on; when the low/high beam lamp is in a low beam state initially, the light source unit forms a low beam light pattern on the light distribution screen; the signal receiving module is configured to receive information indicating turning on or off the high/low beam function, and, when the received information indicates turning on the low beam function, it is unnecessary to additionally control the light projection position adjusting structure to adjust the emergent angle of the light source unit; when the received signal indicates turning on the high beam function, the light projection position adjusting structure is controlled to adjust the emergent angle of the light source unit so as to strengthen the light irradiation at the HV point on the light distribution screen. When the high/low beam lamp is in a high beam state initially, illuminance at the HV point of the light pattern formed by the light source unit on the light distribution screen is increased by 5-342 lx with respect to the illuminance at the HV point of the low beam light pattern; when the received information indicates turning on the low beam function, the light projection position adjusting structure is controlled to adjust the emergent angle of the light source unit so that the light pattern formed by the light source unit is shifted on the light distribution screen, thereby a low beam light pattern is formed on the light distribution screen; when the received signal indicates turning on the high beam function, it is unnecessary to additionally control the light projection position adjustment structure to adjust the emergent angle of the light source unit. To switch between the high beam function and the low beam function, the light projection position adjusting structure is controlled to adjust the emergent angle of the light source unit, so that the light emitted by the light source unit meets the above-mentioned requirement. That is to say, according to the initial state of the high/low beam lamp, operations such as upward shifting, downward shifting, leftward shifting, rightward shifting, or turning over, etc., are carried out when the light source unit is to be switched between the high beam function and the low beam function, so that the light irradiation position is changed to meet the requirement for high beam illumination and low beam illumination as stipulated in applicable laws and regulations.

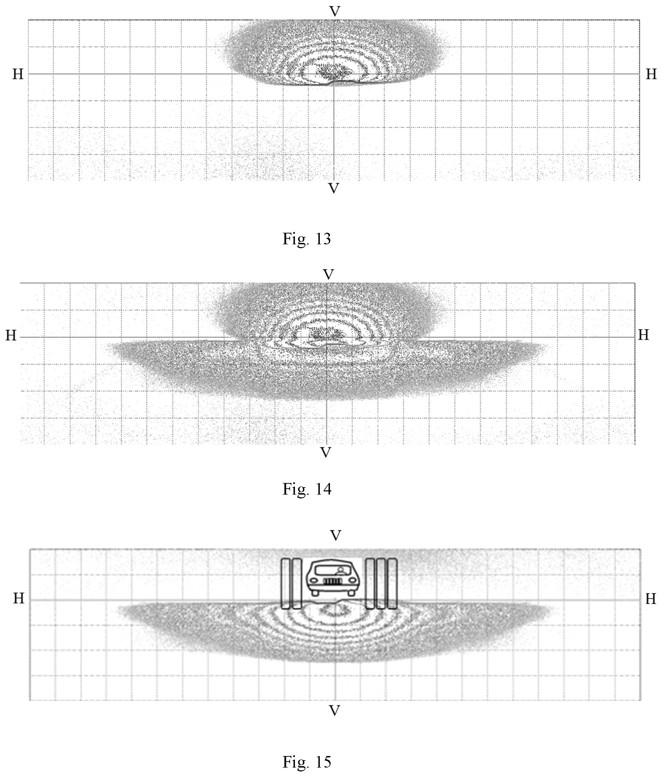

The light projection position adjusting structure can be controlled by adjusting the angle in the vertical direction by means of a horizontal rotating shaft (as shown in Fig. 9) and/or adjusting the angle in the horizontal direction by means of a vertical rotating shaft, or adjusting the angle in the vertical direction and the angle in the horizontal direction at the same time if necessary. In addition, the light source unit can be turned over by rotating a rotating shaft parallel to the primary optical axis, as shown in Fig. 13, in combination with angle adjustment by means of the horizontal rotating shaft A and/or the vertical rotating shaft B if necessary. The primary optical axis is the optical axis of the optical module, and the optical module refers to a device that comprises a light source unit and other components to realize the high beam function and the low beam function. Specifically, as shown in Fig. 9, the optical module is a device held by the horizontal rotating shaft A and the vertical rotating shaft B.

The light projection position adjusting structure may be any structure that can change the light projection position. As an embodiment of the present disclosure, as shown in Figs. 9-11, the light projection position adjusting structure comprises a driving mechanism and a rotary connecting structure, and the rotary connecting structure can adjust the emergent angle of the light source unit under the action of the driving mechanism. The rotary connecting structure is connected between the driving mechanism and the light source unit, and preferably, the driving mechanism may be a motor, and the driving mechanism is connected to the vehicle body via a bracket. The rotary connecting structure comprises a first connecting shaft and a second connecting shaft, wherein the first connecting shaft passes through the light source unit to form the horizontal rotating shaft, and two ends of the first connecting shaft are connected to a fixing bracket; the second connecting shaft forms the vertical rotating shaft and is connected with the driving mechanism. In the working process of the driving mechanism, the vertical distance between the driving mechanism and the light source unit can be changed by means of the second connecting shaft to realize the adjustment of the emergent angle of the light source unit in the vertical direction. The two ends of the first connecting shaft are connected with the bracket via a ball joint, and the second connecting shaft is connected with the light source unit via a ball joint. The distance between the driving mechanism and the light source unit can be adjusted in any way, for example, the distance between the driving mechanism and the light source unit may be adjusted by adjusting the length of the rotary connecting structure connected between the driving mechanism and the light source unit, or the distance between the driving mechanism and the light source unit may be adjusted by adjusting the inclination angle of the rotary connecting structure with respect to the horizontal plane. In other embodiments of the present disclosure, the connection between the light projection position adjusting structure and other light source units (e.g., a secondary low beam light source unit) is similar to the connection between the light projection position adjusting structure and the light source unit (e.g., the primary low beam light source unit). Therefore, it will not be further detailed here.

In the vehicle high-beam and low-beam control system provided in the above basic embodiment of the present disclosure, the light projection position adjusting structure is connected with the light source unit, and the control module controls the light projection position adjusting structure to adjust the emergent angle of the light source unit according to an instruction for turning on or off the high beam/low beam function, so that a low beam light pattern is formed on the light distribution screen when the low beam function is used, and the illuminance at the HV point of the light pattern formed on the light distribution screen when the high beam function is used is increased by 5-342 lx compared with the illuminance at the HV point of the low beam light pattern, thereby the utilization efficiency of light energy is improved, and a potential safety hazard caused by local overtemperature can be reduced. Moreover, it is unnecessary to arrange a high beam circuit and a low beam circuit separately, thus, the high-beam and low-beam circuits in the vehicle can be simplified, and the potential safety hazard can be further reduced. Furthermore, the vehicle high-beam and low-beam control system makes the luminance at the HV point of the high beam meet the requirement of 80% Emax of high beam as stipulated in applicable laws and regulations.

Emax is the brightest spot on the light distribution screen, usually located within a rectangular range of 5 degrees above and below the intersection between the H-H axis and the V-V axis.

The light source unit may be a primary light source unit configured for mainly contributing to luminance or a secondary light source unit for contributing to broadening, and the primary light source unit may be a primary low beam light source unit or a primary high beam light source unit, and the secondary light source may be an secondary low beam light source unit or an secondary high beam light source unit. The light source unit is preferably a primary low beam light source unit for mainly contributing to luminance or a primary high beam light source unit for mainly contributing to luminance. As an embodiment of the present disclosure, the light source unit is a primary low beam light source unit configured for mainly contributing to luminance. By using a primary low beam light source unit, the luminance of the high beam can be ensured, and the luminance of the low beam is not excessively high, thus, the driving safety is improved, and the utilization efficiency of light energy is further improved.

In another embodiment of the present disclosure, when the information received by the signal receiving module indicates turning on the high beam function, the control module controls the primary low beam light source unit to turn on, and controls the light projection position adjusting structure to adjust the emergent angle of the primary low beam light source unit, so that the light emitted by the primary low beam light source unit is shifted upward by 0.4-5 degrees on the light distribution screen with respect to the light when the low beam function is used. When the high beam function is used, the light pattern is shifted upward by 0.4-5 degrees compared with the light pattern when the low beam function is used, thereby the luminance at the HV point of the high beam is closer to the Emax of high beam.

Here, shifting upward refers to moving upward in the extending direction of the V-V line.

As a relatively preferred embodiment, when the information received by the signal receiving module indicates turning on the high beam function, the control module controls the primary low beam light source unit to turn on, and controls the light projection position adjusting structure to adjust the emergent angle of the primary low beam light source unit, so that the light emitted by the primary low beam light source unit is shifted upward by 0.57-2.5 degrees on the light distribution screen with respect to the light when the low beam function is used.

In another embodiment of the present disclosure, in a left-hand driving mode, the control module further controls the light projection position adjusting structure to adjust the emergent angle of the primary low beam light source unit, so that the light emitted by the primary low beam light source unit is shifted leftward by 0-15 degrees on the light distribution screen with respect to the light when the low beam function is used; and in a right-hand driving mode, the control module further controls the light projection position adjusting structure to adjust the emergent angle of the primary low beam light source unit, so that the light emitted by the primary low beam light source unit is shifted rightward by 0-15 degrees on the light distribution screen with respect to the light when the low beam function is used. Thus, the luminance of the high beam at the HV point can be closer to the Emax value of high beam.

According to the present disclosure, shifting leftward and shifting rightward refer to moving in the extending direction of the V-V line.

In a third embodiment of the present disclosure, when the information received by the signal receiving module indicates turning on the high beam function, the control module controls the primary low beam light source unit to turn on, and controls the light projection position adjusting structure to adjust the emergent angle of the primary low beam light source unit, so that the light pattern formed by the primary low beam light source unit on the light distribution screen coincides with a light pattern obtained by rotating the low beam light pattern by 180 degrees around the H-H line that serves as an axis of rotation.

In an embodiment of the present disclosure, the light source module further comprises a secondary low beam light source unit for mainly contributing to broadening. For switching between the high beam and the low beam, the light pattern distribution of the secondary low beam light source unit on the light distribution screen is adjusted by shifting the secondary low beam light source unit upward, downward, leftward or rightward, or turning over the secondary low beam light source unit; alternatively, the light pattern distribution of the secondary low beam light source unit on the light distribution screen is not adjusted. As a relatively preferred embodiment of the present disclosure, the control module is connected with the secondary low beam light source unit, and the light projection position adjusting structure is connected with the secondary low beam light source unit; when the information received by the signal receiving module indicates turning on the low beam function, the control module controls the secondary low beam light source unit to turn on and the light projection position adjusting structure to adjust the emergent angle of the secondary low beam light source unit, so that the secondary low beam light source unit forms a secondary low beam light pattern on the light distribution screen; when the information received by the signal receiving module indicates turning on the high beam function, the control module controls the secondary low beam light source unit to turn on, and controls the light projection position adjusting structure to adjust the emergent angle of the secondary low beam light source unit, so that the illuminance at the HV point of the light pattern formed by the secondary low beam light source unit on the light distribution screen is increased by 5-342 lx compared with the illuminance at the HV point of the secondary low beam light pattern. With the above settings, the luminance of the low beam can be improved while the low beam field is broadened, and the luminance at the HV point of the high beam can be improved while the high beam field is broadened, thereby the requirement stipulated in applicable laws and regulations is met further, and the driving safety is improved further. Moreover, the high beam field and the low beam field can be tuned by means of the light projection position adjusting structure.

According to the present disclosure, there may be one set of light projection position adjusting structure or more than one set of light projection position adjusting structures. In the case that there is one set of light projection position adjusting structure, the set of light projection position adjusting structure can control the adjustment of the primary low beam light source unit and the secondary low beam light source unit simultaneously, so that the adjustment of the primary low beam light source unit and the adjustment of the secondary low beam light source unit are synchronous; in the case that there are more than one set of light projection position adjusting structure, one set of light projection position adjusting structure controls the adjustment of the primary low beam light source unit, and one set of light projection position adjusting structure controls the adjustment of the secondary low beam light source unit, and the primary low beam light source unit and the secondary low beam light source unit can be adjusted separately.

In an embodiment of the present disclosure, when the information received by the signal receiving module indicates turning on the high beam function, the control module controls the secondary low beam light source unit to turn on, and controls the light projection position adjusting structure to adjust the emergent angle of the secondary low beam light source unit, so that the illuminance at the HV point of the light pattern formed by the secondary low beam light source unit on the light distribution screen is increased by 5-342 lx compared with the illuminance at the HV point of the secondary low beam light pattern.

In another embodiment of the present disclosure, when the information received by the signal receiving module indicates turning on the high beam function, the control module controls the secondary low beam light source unit to turn on, and controls the light projection position adjusting structure to adjust the emergent angle of the secondary low beam light source unit, so that the light emitted by the secondary low beam light source unit is shifted upward by 0.4-5 degrees on the light distribution screen with respect to the light when the low beam function is used. When the high beam function is used, the light pattern is shifted upward by 0.4-5 degrees compared with the light pattern when the low beam function is used, thereby the luminance at the HV point of the high beam is closer to the Emax of high beam.

Specifically, the above-mentioned shifting may be moving in the extending direction of the V-V line.

As a relatively preferred embodiment, when the information received by the signal receiving module indicates turning on the high beam function, the control module controls the secondary low beam light source unit to turn on, and controls the light projection position adjusting structure to adjust the emergent angle of the secondary low beam light source unit, so that the light emitted by the secondary low beam light source unit is shifted upward by 0.57-2.5 degrees on the light distribution screen with respect to the light when the low beam function is used.

In another embodiment of the present disclosure, in a left-hand driving mode, the control module further controls the light projection position adjusting structure to adjust the emergent angle of the secondary low beam light source unit, so that the light emitted by the secondary low beam light source unit is shifted leftward by 0-15 degrees on the light distribution screen with respect to the light when the secondary low beam function is used; and in a right-hand driving mode, the control module further controls the light projection position adjusting structure to adjust the emergent angle of the secondary low beam light source unit, so that the light emitted by the secondary low beam light source unit is shifted rightward by 0-15 degrees on the light distribution screen with respect to the light when the low beam function is used. Thus, the luminance of the high beam at the HV point can be closer to the Emax value of high beam.

According to the present disclosure, shifting leftward and shifting rightward refer to moving in the extending direction of the V-V line.

In another embodiment of the present disclosure, when the information received by the signal receiving module indicates turning on the high beam function, the control module controls the secondary low beam light source unit to turn on, and controls the light projection position adjusting structure to adjust the emergent angle of the secondary low beam light source unit, so that the light pattern formed by the secondary low beam light source unit on the light distribution screen coincides with a light pattern obtained by rotating the secondary low beam light pattern by 180 degrees around a line H-H that serves as an axis of rotation.

In an embodiment of the present disclosure, the primary low beam light source unit comprises at least one primary low beam light source; when the information received by the signal receiving module indicates turning on the high beam function, the control module controls the circuit where the primary low beam light source is located to increase the current inputted to the primary low beam light source and/or a duty ratio of the current. Exemplarily, the duty ratio of the current of the primary low beam light source is 100%. When the received information indicates turning on the high beam function, the luminance at the central position of the high beam can be higher by increasing the current input to the primary low beam light source unit and/or the duty ratio of the current, so that the luminance of the emitted high beam can further meet the requirement stipulated in applicable laws and regulations, and the driving safety can be improved.

In an embodiment of the present disclosure, the primary low beam light source unit comprises at least three primary low beam light source; when the information received by the signal receiving module indicates turning on the high beam function, the control module controls the circuit where the primary low beam light source in the middle is located to increase the current inputted to the primary low beam light source and/or the duty ratio of the current. When the received information indicates turning on the high beam function, the luminance at the central position of the high beam can be higher by increasing the current input to the primary low beam light source unit in the middle and/or the duty ratio of the current, so that the luminance of the emitted high beam can further meet the requirement stipulated in applicable laws and regulations, and the driving safety can be improved. Specifically, the increased amount of the current or the increased amount of the duty ratio of the current may be determined according to the actual situation. For example, when the high beam is used, the duty ratio of the current of the primary low beam light source located in the middle may be 100%; when the low beam is used, the duty ratio of the current of the primary low beam light source may be 80%.

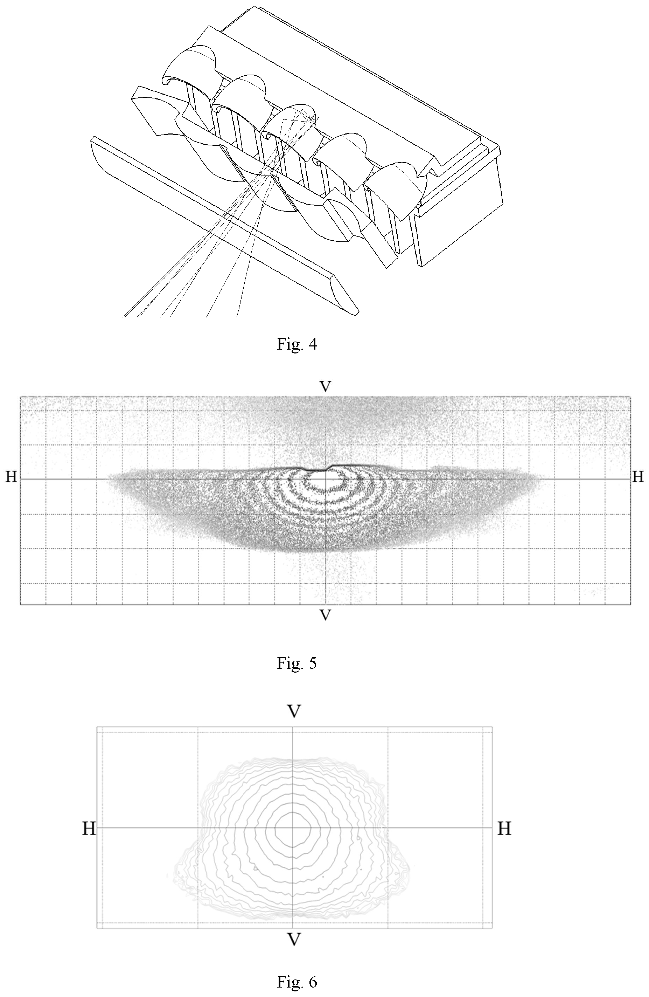

Specifically, in the case that the primary low beam light source unit includes an odd number of primary low beam light sources, the current input to the primary low beam light source in the circuit where the primary low beam light source in the middle is located and/or the duty ratio of the current may be increased; in the case that the primary low beam light source unit includes an even number of primary low beam light sources, the current input to the primary low beam light source in the circuit where the two primary low beam light sources in the middle are located and/or the duty ratio of the current may be increased. As shown in Fig. 4, there are five primary low beam light sources, the primary low beam light source in the middle has higher input current or a higher duty ratio, while the primary low beam light sources on the two sides have lower input current or a lower duty ratio, and the light pattern formed by the primary low beam light sources is shown in Fig. 5.

In an embodiment of the present disclosure, the light source module further comprises a secondary high beam light source unit, and the control module is connected with the secondary high beam light source unit; when the information received by the signal receiving module indicates turning on the low beam function, the control module controls the secondary high beam light source unit to turn off; and when the information received by the signal receiving module indicates turning on the high beam function, the control module controls the secondary high beam light source unit to turn on. With the secondary high beam light source unit, the luminance of the high beam can be improved, thereby the high beam further meets the requirement in applicable laws and regulations, and the driving safety is improved. The resultant light pattern is shown in Fig. 6.

In an embodiment of the present disclosure, the light projection position adjusting structure is connected with the secondary high beam light source unit, so that the emergent angle of the secondary high beam light source unit can be adjusted. With the above setting, the broadening of the high beam can be turned to enlarge the high beam field, thereby further improve the driving safety.

In a relatively preferred embodiment of the present disclosure, a vehicle high-beam and low-beam control system is provided. The vehicle high-beam and low-beam control system comprises a signal receiving module, a light source module and a control module, wherein the light source module comprises a primary low beam light source unit, a secondary low beam light source unit, a secondary high beam light source unit, and a light projection position adjusting structure, wherein the primary low beam light source unit is mainly for contributing to luminance, while the secondary low beam light source unit is mainly for contributing to broadening; the primary low beam light source unit comprises at least three primary low beam light sources; and the light projection position adjusting structure is connected with the primary low beam light source unit, the secondary low beam light source unit and the secondary high beam light source unit respectively to adjust the emergent angles of the primary low beam light source unit, the secondary low beam light source unit, and the secondary high beam light source unit; the signal receiving module is adapted to receive information indicating turning on or off the high/low beam function, and the control module is connected with the signal receiving module, the primary low beam light source unit, the secondary low beam light source unit, the secondary high beam light source unit and the light projection position adjusting structure respectively. When the information received by the signal receiving module indicates turning on the low beam function, the control module controls the primary low beam light source unit and the secondary low beam light source unit to turn on, controls the secondary high beam light source unit to turn off, and controls the light projection position adjusting structure to adjust the emergent angles of the primary low beam light source unit and the secondary low beam light source unit, so that the primary low beam light source unit and the secondary low beam light source unit form a low beam light pattern on the light distribution screen; when the information received by the signal receiving module indicates turning on the high beam function, the control module controls the primary low beam light source unit, the secondary low beam light source unit and the secondary high beam light source unit to turn on, and controls the light projection position adjusting structure to adjust the emergent angles of the primary low beam light source unit and the secondary low beam light source unit, so that the light emitted by the primary low beam light source unit and the secondary low beam light source unit is shifted upward by 0.4-5 degrees on the light distribution screen with respect to the light when the low beam function is used, or is shifted leftward or rightward by 0-15 degrees (leftward shifting for left-hand driving, and rightward shifting for right-hand driving) while it is shifted upward by 0.4-5 degrees, or the light pattern formed by the primary low beam light source unit and the secondary low beam light source unit on the light distribution screen coincides with a light pattern obtained by rotating the low beam light pattern by 180 degrees around the H-H line that serves as an axis of rotation; at the same time, the control module controls the circuit where the primary low beam light source in the middle is located to increase the current input to the primary low beam light source and/or the duty ratio of the current.

In the vehicle high-beam and low-beam control system provided in the above preferred embodiment, there are two sets of light projection position adjustment structures, in which one set of light projection position adjustment structure is used for controlling the primary low beam light source unit and the secondary low beam light source unit at the same time, and the other set of light projection position adjustment structure is used for controlling the secondary high beam light source unit.

In the vehicle high-beam and low-beam control system provided in the above preferred embodiment, the light projection position adjusting structure is connected with the primary low beam light source unit, and the control module controls the light projection position adjusting structure to adjust the emergent angles of the primary low beam light source unit and the secondary low beam light source unit according to the instruction for turning on or off the high/low beam function. Thus, when the low beam function is used, a low beam light pattern is formed on the light distribution screen; when the high beam function is used, the light emitted from the primary low beam light source unit and the secondary low beam light source unit is shifted upward by 0.4-5 degrees on the light distribution screen with respect to the light when the low beam function is used, or the light emitted from the primary low beam light source unit and the secondary low beam light source unit is shifted leftward or rightward by 0-15 degrees (leftward shifting for left-hand driving, and rightward shifting for right-hand driving) while it is shifted upward by 0.4-5 degrees, or the light pattern formed by the primary low beam light source unit and the secondary low beam light source unit coincides with a light pattern obtained by rotating the low beam light pattern by 180 degrees around the H-H line that serves as an axis of rotation. In that way, the utilization efficiency of light energy is improved, and the potential safety hazard caused by local overtemperature is reduced. Moreover, it is unnecessary to arrange a high beam circuit and a low beam circuit separately, thus, the high-beam and low-beam circuits in the vehicle can be simplified, and the potential safety hazard can be further reduced. Furthermore, the vehicle high-beam and low-beam control system makes the luminance at the HV point of the high beam meet the requirement of 80% Emax of high beam as stipulated in applicable laws and regulations. Only low beam position calibration is required, while high beam position calibration is unnecessary. Thus, the light calibration steps on the vehicle production line can be reduced, and the production takt can be improved.

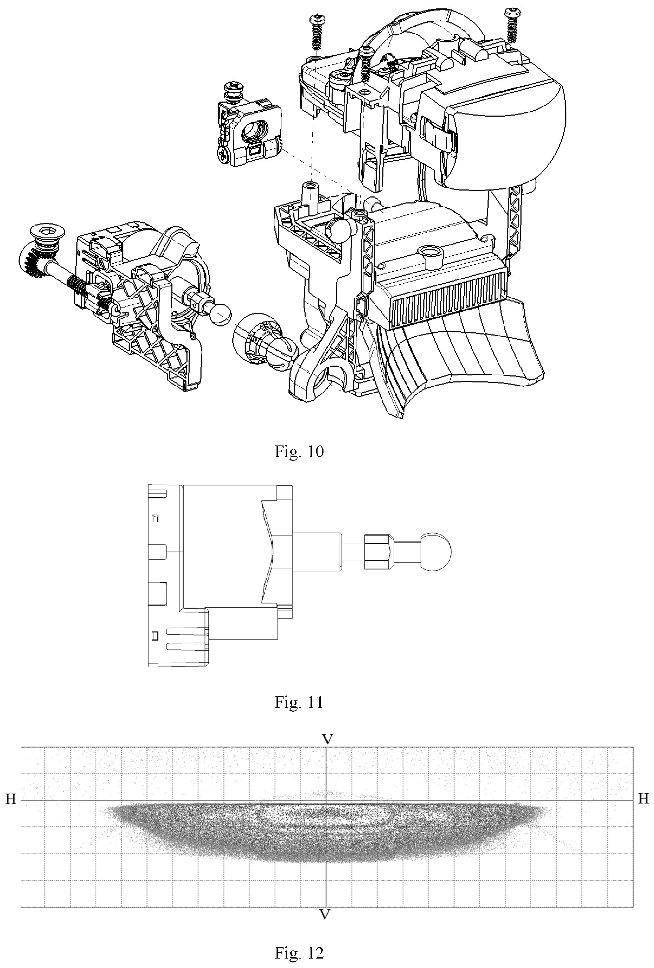

In the case that the control system provided in the above embodiment only includes the primary low beam light source unit, the high beam light pattern is as shown in Fig. 3, and the low beam light pattern is as shown in Fig. 8; in the case that the control system includes both the primary low beam light source unit and the secondary low beam light source unit, the high beam light pattern is as shown in Fig. 2 or Fig. 14 ( Figs. 12-13 correspond to Fig. 14, Fig. 13 shows the primary high beam light pattern formed by the primary low beam light source unit, and Fig. 12 shows the secondary high beam light pattern formed by the secondary low beam light source unit), and the low beam light pattern is as shown in Fig. 1; in this case, the current and/or the duty ratio of the current of the primary low beam light source located in the middle is increased, the high beam light pattern is as shown in Fig. 5; in the case that the control system includes the primary low beam light source unit, the secondary low beam light source unit, and the secondary high beam light source unit, the high beam light pattern is as shown in Fig. 7, wherein Fig. 6 corresponds to Fig. 7, and shows the light pattern formed by the secondary high beam light source unit.

In the vehicle high-beam and low-beam control system provided in the above embodiment, as shown in Fig. 15, the light source module further comprises an ADB light source unit having an ADB (Adaptive Driving Beam) function, and the control module is connected with the ADB light source unit; when the information received by the signal receiving module indicates turning on the low beam function, the control module controls the ADB light source unit to turn off; when the information received by the signal receiving module indicates turning on the high beam function, the control module controls the ADB light source unit to turn on. The control unit can turn on the ADB light source unit to adjust the light pattern according to the information detected by the camera, and can control the operation of the light projection position adjustment structure according to the shape of the light pattern, so that the requirement in the above embodiment can be met when the low beam function or the high beam function is used, and an effect of avoiding dazzling of other road participants can be achieved, so as to ensure night driving safety.

In a second basic embodiment, the present disclosure provides a vehicle high-beam and low-beam control method, which comprises: the light source module comprises a light source unit and a light projection position adjusting structure that is connected with the light source unit so as to adjust an emergent angle of the light source unit; in response to the receival of a control instruction for turning on the low beam, controlling the light source unit to turn on, and controlling the light projection position adjusting structure to adjust an emergent angle of the light source unit, so that the light source unit forms a low beam light pattern on a light distribution screen; and in response to the receival of a control instruction for turning on the high beam, controlling the light source unit to turn on, and controlling the light projection position adjusting structure to adjust the emergent angle of the light source unit, so that the illuminance at an HV point of the light pattern formed by the light source unit on the light distribution screen is increased by 5-342 lx compared with the illuminance at the HV point of the low beam light pattern.

The control method provided in the above basic embodiment can be executed by the above-mentioned control system.

In the vehicle high-beam and low-beam control method provided in the above basic embodiment of the present disclosure, the light projection position adjusting structure is connected with the light source unit, and the light projection position adjusting structure is controlled to adjust the emergent angle of the light source unit according to an instruction for turning on or off the high beam/low beam function, so that a primary low beam light pattern is formed on the light distribution screen when the low beam function is used, and the illuminance at the HV point of the light pattern formed on the light distribution screen when the high beam function is used is increased by 5-342 lx compared with the illuminance at the HV point of the low beam light pattern, thereby the requirement stipulated in applicable laws and regulations is met, it is unnecessary to provide a high beam system and a low beam system at the same time, the utilization efficiency of light energy is improved, and a potential safety hazard caused by local overtemperature can be reduced. Moreover, it is unnecessary to arrange a high beam circuit and a low beam circuit separately, thus, the high-beam and low-beam circuits in the vehicle can be simplified, and the potential safety hazard can be further reduced.

In an embodiment of the present disclosure, the light source unit is a primary low beam light source unit configured for mainly contributing to luminance. By using a primary low beam light source unit, the luminance of the high beam can be ensured, and the luminance of the low beam is not excessively high, thus, the driving safety is improved, and the utilization efficiency of light energy is further improved.

As an embodiment of the present disclosure, in response to the receival of a control instruction for turning on the high beam, the primary low beam light source unit is controlled to turn on, and the light projection position adjusting structure is controlled to adjust the emergent angle of the primary low beam light source unit, so that a part of the light emitted by the primary low beam light source unit is shifted upward by 0.4-5 degrees on the light distribution screen with respect to the light when the low beam function is used. When the high beam function is used, the light pattern is shifted upward by 0.4-5 degrees compared with the light pattern when the low beam function is used, thereby the luminance at the HV point of the high beam is closer to the Emax of high beam.

Specifically, the above-mentioned upward shifting may be moving in the extending direction of the V-V line.

As a relatively preferred embodiment, in response to the receival of a control instruction for turning on the high beam, the primary low beam light source unit is controlled to turn on, and the light projection position adjusting structure is controlled to adjust the emergent angle of the primary low beam light source unit, so that a part of the light emitted by the primary low beam light source unit is shifted upward by 0.57-2.5 degrees on the light distribution screen with respect to the light when the low beam function is used.

As a relatively preferred embodiment, in a left-hand driving mode, in response to the receival of a control instruction for turning on the high beam, the primary low beam light source unit is controlled to turn on, and the light projection position adjusting structure is controlled to adjust the emergent angle of the primary low beam light source unit, so that a part of the light emitted by the primary low beam light source unit is shifted leftward by 0-15 degrees on the light distribution screen with respect to the light when the low beam function is used; in a right-hand driving mode, in response to the receival of a control instruction for turning on the high beam, the primary low beam light source unit is controlled to turn on, and the light projection position adjusting structure is controlled to adjust the emergent angle of the primary low beam light source unit, so that a part of the light emitted by the primary low beam light source unit is shifted rightward by 0-15 degrees on the light distribution screen with respect to the light when the low beam function is used.

In another embodiment of the present disclosure, in response to the receival of a control instruction for turning on the high beam, the primary low beam light source unit is controlled to turn on, and the light projection position adjusting structure is controlled to adjust the emergent angle of the primary low beam light source unit, so that the light pattern formed by the primary low beam light source unit on the light distribution screen coincides with a light pattern obtained by rotating the low beam light pattern by 180 degrees around an H-H line that serves as an axis of rotation.

In an embodiment of the present disclosure, the light source unit is a primary low beam light source unit configured for mainly contributing to luminance, and the light source module further comprises a secondary low beam light source unit for mainly contributing to broadening; in response to the receival of a control instruction for turning on the low beam, the secondary low beam light source unit is controlled to turn on, and the light projection position adjusting structure is controlled to adjust the emergent angle of the secondary low beam light source unit, so that the secondary low beam light source unit forms a secondary low beam light pattern on the light distribution screen; and in response to the receival of a control instruction for turning on the high beam, the secondary low beam light source unit is controlled to turn on, and controlling the light projection position adjusting structure is controlled to adjust the emergent angle of the secondary low beam light source unit, so that the illuminance at an HV point of the light pattern formed on the light distribution screen is increased by 5-342 lx compared with the illuminance at the HV point of the secondary low beam light pattern. With the above settings, the luminance of the low beam can be improved while the low beam field is broadened, and the luminance of the high beam can be improved while the high beam field is broadened, thereby the requirement stipulated in applicable laws and regulations is met further, and the driving safety is improved further. Moreover, the high beam field and the low beam field can be tuned by means of the light projection position adjusting structure.

According to the present disclosure, there may be one set of light projection position adjusting structure or more than one set of light projection position adjusting structures. In the case that there is one set of light projection position adjusting structure, the set of light projection position adjusting structure can control the adjustment of the primary low beam light source unit and the secondary low beam light source unit simultaneously, so that the adjustment of the primary low beam light source unit and the adjustment of the secondary low beam light source unit are synchronous; in the case that there are more than one set of light projection position adjusting structure, one set of light projection position adjusting structure controls the adjustment of the primary low beam light source unit, and one set of light projection position adjusting structure controls the adjustment of the secondary low beam light source unit, and the primary low beam light source unit and the secondary low beam light source unit can be adjusted separately.

In an embodiment of the present disclosure, in response to the receival of a control instruction for turning on the high beam, the secondary low beam light source unit is controlled to turn on, and the light projection position adjusting structure is controlled to adjust the emergent angle of the secondary low beam light source unit, so that the light emitted by the secondary low beam light source unit is shifted upward by 0.4-5 degrees on the light distribution screen with respect to the light when the low beam function is used. When the high beam function is used, the light pattern is shifted upward by 0.4-5 degrees compared with the light pattern when the low beam function is used, thereby the luminance at the HV point of the high beam is closer to the Eₘₐₓ of high beam.

Specifically, the above-mentioned shifting may be moving in the extending direction of the V-V line.

As a relatively preferred embodiment of the present disclosure, in response to the receival of a control instruction for turning on the high beam, the secondary low beam light source unit is controlled to turn on, and the light projection position adjusting structure is controlled to adjust the emergent angle of the secondary low beam light source unit, so that the light emitted by the secondary low beam light source unit is shifted upward by 0.57-2.5 degrees on the light distribution screen with respect to the light when the low beam function is used.

In another embodiment of the present disclosure, in a left-hand driving mode, in response to the receival of a control instruction for turning on the high beam, the secondary low beam light source unit is controlled to turn on, and the light projection position adjusting structure is controlled to adjust the emergent angle of the secondary low beam light source unit, so that the light emitted by the secondary low beam light source unit is shifted leftward by 0-15 degrees on the light distribution screen with respect to the light when the secondary low beam function is used; in a right-hand driving mode, in response to the receival of an instruction for turning on the high beam, the secondary low beam light source unit is controlled to turn on, and the light projection position adjusting structure is controlled to adjust the emergent angle of the secondary low beam light source unit, so that the light emitted by the secondary low beam light source unit is shifted rightward by 0-15 degrees on the light distribution screen with respect to the light when the low beam function is used. Thus, the luminance of the high beam at the HV point can be closer to the Eₘₐₓ value of high beam.

According to the present disclosure, shifting leftward and shifting rightward refer to moving in the extending direction of the V-V line.

In another embodiment of the present disclosure, in response to the receival of an instruction for turning on the high beam, the secondary low beam light source unit is controlled to turn on, and the light projection position adjusting structure is controlled to adjust the emergent angle of the secondary low beam light source unit, so that the light pattern formed by the secondary low beam light source unit on the light distribution screen coincides with a light pattern obtained by rotating the secondary low beam light pattern by 180 degrees around an H-H line that serves as an axis of rotation.

In an embodiment of the present disclosure, the primary low beam light source unit comprises at least one primary low beam light source; when the information received by the signal receiving module indicates turning on the high beam function, the control module controls the circuit where the primary low beam light source is located to increase the current inputted to the primary low beam light source and/or a duty ratio of the current. Exemplarily, the duty ratio of the current of the primary low beam light source is 100%. When the received information indicates turning on the high beam function, the luminance at the central position of the high beam can be higher by increasing the current input to the primary low beam light source unit and/or the duty ratio of the current, so that the luminance of the emitted high beam can further meet the requirement stipulated in applicable laws and regulations, and the driving safety can be improved.

In a relatively preferred embodiment of the present disclosure, the primary low beam light source unit comprises at least three primary low beam light sources; in response to the receival of an instruction that indicates turning on the high beam function, the circuit where the primary low beam light source in the middle is located is controlled to increase the current inputted to the primary low beam light source and/or a duty ratio of the current. When the high beam is turned on, the luminance at the central position of the high beam can be higher by increasing the current input to the primary low beam light source in the middle and/or the duty ratio of the current, so that the luminance of the emitted high beam can further meet the requirement stipulated in applicable laws and regulations, and the driving safety can be improved.

In an embodiment of the present disclosure, the light source unit is a primary low beam light source unit configured for mainly contributing to luminance, the light source module further comprises a secondary high beam light source unit, and the light projection position adjusting structure is connected with the secondary high beam light source unit so as to adjust the emergent angle of the secondary high beam light source unit; in response to the receival of a control instruction for turning on the low beam, the secondary high beam light source unit is controlled to turn off; and in response to the receival of a control instruction for turning on the high beam, the secondary high beam light source unit is controlled to turn on. With the secondary high beam light source unit, the luminance of the high beam can be improved, thereby the high beam further meets the requirement in applicable laws and regulations, and the driving safety is improved. In addition, with the above setting, the broadening of the high beam can be turned, thereby the driving safety is further improved.

As a relatively preferred embodiment, the present disclosure provides a vehicle high-beam and low-beam control method, which comprises: a light source module comprising a primary low beam light source unit, a secondary low beam light source unit, a secondary high beam light source unit, and a light projection position adjusting structure, wherein the primary low beam light source unit is mainly for contributing to luminance, and the light projection position adjusting structure is connected with the primary low beam light source unit, the secondary low beam light source unit and the secondary high beam light source unit respectively, so as to adjust the emergent angles of the primary low beam light source unit, the secondary low beam light source unit, and the secondary high beam light source unit; in response to the receival of an instruction for turning on the low beam, the primary low beam light source unit and the secondary low beam light source unit are controlled to turn on and the secondary high beam light source unit is controlled to turn off, and the light projection position adjusting structure is controlled to adjust the emergent angles of the primary low beam light source unit and the secondary low beam light source unit, so that the primary low beam light source unit and the secondary low beam light source unit form a low beam light pattern on the light distribution screen; in response to the receival of an instruction for turning on the high beam function, the primary low beam light source unit, the secondary low beam light source unit and the secondary high beam light source unit are controlled to turn on, and the light projection position adjusting structure is controlled to adjust the emergent angles of the primary low beam light source unit and the secondary low beam light source unit, so that the light emitted by the primary low beam light source unit and the secondary low beam light source unit is shifted upward by 0.4-5 degrees on the light distribution screen with respect to the light when the low beam function is used, or is shifted leftward or rightward by 0-15 degrees (leftward shifting for left-hand driving, and rightward shifting for right-hand driving) while it is shifted upward by 0.4-5 degrees, or the light pattern formed by the primary low beam light source unit and the secondary low beam light source unit on the light distribution screen coincides with a light pattern obtained by rotating the low beam light pattern by 180 degrees around the H-H line that serves as an axis of rotation; at the same time, the control module controls the circuit where the primary low beam light source in the middle is located to increase the current input to the primary low beam light source and/or the duty ratio of the current.

In the vehicle high-beam and low-beam control method provided in the above preferred embodiment, there are two sets of light projection position adjustment structures, in which one set of light projection position adjustment structure is used for controlling the primary low beam light source unit and the secondary low beam light source unit at the same time, and the other set of light projection position adjustment structure is used for controlling the secondary high beam light source unit.

In the vehicle high-beam and low-beam control method provided in the above preferred embodiment, the light projection position adjusting structure is connected with the primary low beam light source unit, and the control module controls the light projection position adjusting structure to adjust the emergent angles of the primary low beam light source unit and the secondary low beam light source unit according to the instruction for turning on or off the high/low beam function. Thus, when the low beam function is used, a low beam light pattern is formed on the light distribution screen; when the high beam function is used, the light emitted from the primary low beam light source unit and the secondary low beam light source unit is shifted upward by 0.4-5 degrees on the light distribution screen with respect to the light when the low beam function is used, or the light emitted from the primary low beam light source unit and the secondary low beam light source unit is shifted leftward or rightward by 0-15 degrees (leftward shifting for left-hand driving, and rightward shifting for right-hand driving) while it is shifted upward by 0.4-5 degrees, or the light pattern formed by the primary low beam light source unit and the secondary low beam light source unit coincides with a light pattern obtained by rotating the low beam light pattern by 180 degrees around the H-H line that serves as an axis of rotation. In that way, the luminance at the HV point meets the requirement for high beam as stipulated in applicable laws and regulations, it is unnecessary to provide a high beam system and a low beam system at the same time, the utilization efficiency of light energy is improved, and the potential safety hazard caused by local overtemperature is reduced. Moreover, it is unnecessary to arrange a high beam circuit and a low beam circuit separately, thus, the high-beam and low-beam circuits in the vehicle can be simplified, and the potential safety hazard can be further reduced. Furthermore, the vehicle high-beam and low-beam control system makes the luminance at the HV point of the high beam meet the requirement of 80% Eₘₐₓ of high beam as stipulated in applicable laws and regulations. Only low beam position calibration is required, while high beam position calibration is unnecessary. Thus, the light calibration steps on the vehicle production line can be reduced, and the production takt can be improved.

As a third basic embodiment of the present disclosure, a vehicle is provided, and the vehicle comprises the vehicle high-beam and low-beam control system according to any of the above technical schemes, and executes the low beam and high beam control method according to any of the above technical schemes. The vehicle has all the advantages of the above-mentioned vehicle high-beam and low-beam control system and vehicle high-beam and low-beam control method, and it will not be further detailed herein.

While some preferred embodiments of the present disclosure are described above with reference to the accompanying drawings, the present disclosure is not limited to the details in those embodiments. Those skilled in the art can make various simple modifications and variations to the technical scheme of the present disclosure without departing from the technical concept of the present disclosure. However, all these simple modifications and variations shall be deemed as falling in the scope of protection of the present disclosure.

In addition, it may be noted that the specific technical features described in above embodiments may be combined in any appropriate form, provided that there is no conflict among them. To avoid unnecessary repetition, various possible combinations are not described specifically in the present disclosure.

Moreover, different embodiments of the present disclosure may also be combined freely as required, as long as the combinations don't deviate from the ideal of the present disclosure. However, such combinations shall also be deemed as being disclosed in the present disclosure.

## Claims

1. A vehicle high-beam and low-beam control system, comprising a signal receiving module, a light source module, and a control module, wherein
the light source module comprises a light source unit and a light projection position adjusting structure, the light projection position adjusting structure is connected with the light source unit so as to adjust an emergent angle of the light source unit;
the signal receiving module is adapted to receive information that indicates turning on or off a high beam/low beam function, and the control module is connected with the signal receiving module, the light source unit and the light projection position adjusting structure respectively; when the information received by the signal receiving module indicates turning on the low beam function, the control module controls the light source unit to turn on, and controls the light projection position adjusting structure to adjust the emergent angle of the light source unit, so that the light source unit forms a low beam light pattern on a light distribution screen; and when the information received by the signal receiving module indicates turning on the high beam function, the control module controls the light source unit to turn on, and controls the light projection position adjusting structure to adjust the emergent angle of the light source unit so that the illuminance at an HV point of the light pattern formed by the light source unit on the light distribution screen is increased by 5-342 lx compared with the illuminance at the HV point of the low beam light pattern.

2. The vehicle high-beam and low-beam control system of claim 1, wherein the light source unit is a primary low beam light source unit configured for mainly contributing to luminance.

3. The vehicle high-beam and low-beam control system of claim 2, wherein when the information received by the signal receiving module indicates turning on the high beam function, the control module controls the primary low beam light source unit to turn on, and controls the light projection position adjusting structure to adjust the emergent angle of the primary low beam light source unit, so that the light emitted by the primary low beam light source unit is shifted upward by 0.4-5 degrees on the light distribution screen with respect to the light when the low beam function is used.

4. The vehicle high-beam and low-beam control system of claim 3, wherein in a left-hand driving mode, the control module further controls the light projection position adjusting structure to adjust the emergent angle of the primary low beam light source unit, so that the light emitted by the primary low beam light source unit is shifted leftward by 0-15 degrees on the light distribution screen with respect to the light when the low beam function is used; and
in a right-hand driving mode, the control module further controls the light projection position adjusting structure to adjust the emergent angle of the primary low beam light source unit, so that the light emitted by the primary low beam light source unit is shifted rightward by 0-15 degrees on the light distribution screen with respect to the light when the low beam function is used.

5. The vehicle high-beam and low-beam control system of claim 2, wherein when the information received by the signal receiving module indicates turning on the high beam function, the control module controls the primary low beam light source unit to turn on, and controls the light projection position adjusting structure to adjust the emergent angle of the primary low beam light source unit, so that the light pattern formed by the primary low beam light source unit on the light distribution screen coincides with a light pattern obtained by rotating the low beam light pattern by 180 degrees around a line H-H that serves as an axis of rotation.

6. The vehicle high-beam and low-beam control system of any of claims 2 to 5, wherein the light source module further comprises a secondary low beam light source unit for mainly contributing to broadening, the control module is connected with the secondary low beam light source unit, and the light projection position adjusting structure is connected with the secondary low beam light source unit; when the information received by the signal receiving module indicates turning on the low beam function, the control module controls the secondary low beam light source unit to turn on, and controls the light projection position adjusting structure to adjust the emergent angle of the secondary low beam light source unit, so that the secondary low beam light source forms a secondary low beam light pattern on the light distribution screen; and when the information received by the signal receiving module indicates turning on the high beam function, the control module controls the secondary low beam light source unit to turn on, and controls the light projection position adjusting structure to adjust the emergent angle of the secondary low beam light source unit, so that the illuminance at the HV point of the light pattern formed by the secondary low beam light source unit on the light distribution screen is increased by 5-342 lx compared with the illuminance at the HV point of the secondary low beam light pattern.

7. The vehicle high-beam and low-beam control system of any of claims 2 to 5, wherein the primary low beam light source unit comprises at least one primary low beam light source; when the information received by the signal receiving module indicates turning on the high beam function, the control module controls the circuit where the primary low beam light source is located to increase the current inputted to the primary low beam light source and/or a duty ratio of the current.

8. The vehicle high-beam and low-beam control system of claim 7, wherein the primary low beam light source unit comprises at least three primary low beam light sources; when the information received by the signal receiving module indicates turning on the high beam function, the control module controls the circuit where the primary low beam light source in the middle is located to increase the current inputted to the primary low beam light source and/or a duty ratio of the current.

9. The vehicle high-beam and low-beam control system of any of claims 2 to 5, wherein the light source module further comprises a secondary high beam light source unit, and the control module is connected with the secondary high beam light source unit; when the information received by the signal receiving module indicates turning on the low beam function, the control module controls the secondary high beam light source unit to turn off; and when the information received by the signal receiving module indicates turning on the high beam function, the control module controls the secondary high beam light source unit to turn on.

10. The vehicle high-beam and low-beam control system of claim 9, wherein the light source module further comprises an ADB light source unit, and the control module is connected with the ADB light source unit; when the information received by the signal receiving module indicates turning on the low beam function, the control module controls the ADB light source unit to turn off; and when the information received by the signal receiving module indicates turning on the high beam function, the control module controls the ADB light source unit to turn on.

11. A vehicle high-beam and low-beam control method, comprising:
a light source module comprising a light source unit and a light projection position adjusting structure that is connected with the light source unit so as to adjust an emergent angle of the light source unit;
in response to the receival of a control instruction for turning on the low beam, controlling the light source unit to turn on, and controlling the light projection position adjusting structure to adjust an emergent angle of the light source unit, so that the light source unit forms a low beam light pattern on a light distribution screen; and
in response to the receival of a control instruction for turning on the high beam, controlling the light source unit to turn on, and controlling the light projection position adjusting structure to adjust the emergent angle of the light source unit, so that the illuminance at an HV point of the light pattern formed by the light source unit on the light distribution screen is increased by 5-342 lx compared with the illuminance at the HV point of the low beam light pattern.

12. The vehicle high-beam and low-beam control method of claim 11, wherein the light source unit is a primary low beam light source unit for mainly contributing to luminance; in response to the receival of a control instruction for turning on the high beam, the primary low beam light source unit is controlled to turn on, and the light projection position adjusting structure is controlled to adjust the emergent angle of the primary low beam light source unit, so that the light emitted from the primary low beam light source unit is shifted upward by 0.4-5 degrees on the light distribution screen with respect to the light when the low beam function is used; or
in response to the receival of a control instruction for turning on the high beam, the primary low beam light source unit is controlled to turn on, and the light projection position adjusting structure is controlled to adjust the emergent angle of the primary low beam light source unit, so that the light pattern formed by the primary low beam light source unit on the light distribution screen coincides with a light pattern obtained by rotating the low beam light pattern by 180 degrees around a line H-H that serves as an axis of rotation.

13. The vehicle high-beam and low-beam control method of claim 11 or 12, wherein the light source unit is a primary low beam light source unit for mainly contributing to luminance, and the light source module further comprises a secondary low beam light source unit for mainly contributing to broadening;
in response to the receival of a control instruction for turning on the low beam, the secondary low beam light source unit is controlled to turn on, and the light projection position adjusting structure is controlled to adjust the emergent angle of the secondary low beam light source unit, so that the secondary low beam light source unit forms a secondary low beam light pattern on the light distribution screen; and in response to the receival of a control instruction for turning on the high beam, the secondary low beam light source unit is controlled to turn on, and the light projection position adjusting structure is controlled to adjust the emergent angle of the secondary low beam light source unit, so that the illuminance at the HV point of the light pattern formed by the secondary low beam light source unit on the light distribution screen is increased by 5-342 lx compared with the illuminance at the HV point of the secondary low beam light pattern.

14. The vehicle high-beam and low-beam control method of claim 11 or 12, wherein the light source unit is a primary low beam light source unit for mainly contributing to luminance, the light source module further comprises a secondary high beam light source unit, and the light projection position adjusting structure is connected with the secondary high beam light source unit so as to adjust the emergent angle of the secondary high beam light source unit; in response to the receival of a control instruction for turning on the low beam, the secondary high beam light source unit is controlled to turn off; and in response to the receival of a control instruction for turning on the high beam, the secondary high beam light source unit is controlled to turn on.

15. A vehicle that comprises the vehicle high-beam and low-beam control system of any of claims 1 to 10 and executes the vehicle high-beam and low-beam control method of any of claims 11 to 14.
